Europäisches Patentamt

European Patent Office

Office européen des brevets

(11) Publication number: **0 592 681 A1**

## EUROPEAN PATENT APPLICATION
## published in accordance with Art. 158(3) EPC

(21) Application number: 93906805.2

(51) Int. Cl.5: **G05B 19/403**

(22) Date of filing: **23.03.93**

(86) International application number:
**PCT/JP93/00340**

(87) International publication number:
**WO 93/20491 (14.10.93 93/25)**

(30) Priority: **02.04.92 JP 80911/92**

(43) Date of publication of application:
**20.04.94 Bulletin 94/16**

(84) Designated Contracting States:
**DE IT SE**

(71) Applicant: **FANUC LTD.**
**3580, Shibokusa Aza-Komanba, Oshino-mura**
**Minamitsuru-gun, Yamanashi 401-05(JP)**

(72) Inventor: **KAWAMURA, Hideaki**
**24-9, Kiyokawacho**
**Hachioji-shi, Tokyo 193(JP)**
Inventor: **ISHIKAWA, Haruyuki**
**Rose Heights Ogikubo 301,**
**3-50-10, Asagaya Minami**
**Suginami-ku, Tokyo 166(JP)**

(74) Representative: **Brunner, Michael John et al**
**GILL JENNINGS & EVERY**
**Broadgate House**
**7 Eldon Street**
**London EC2M 7LH (GB)**

(54) **TOOL COORDINATES DEFINITION SYSTEM.**

(57) A tool coordinates definition system capable of easily obtaining a transformation matrix for defining a tool coordinates system of a robot. The tool coordinates system (10C) at the 0° position of the robot is rotated around each axis so that the tool coordinates system (10C) becomes parallel to a base coordinates system (10A). A transformation matrix (XO) representing the relation of inclination between the hand coordinates system (10B) and the tool coordinates system (10C) is determined on the basis of an angle of rotation around each axis (P, Q, R) at that time and a matrix [HAND O] representing the attitude of the hand coordinates system at the 0° position. The attitude of the hand coordinates system (10B) at the 0° position can be obtained easily from a design value. An angle of rotation around each axis, too, can be obtained easily from a drawing, etc. Therefore, the transformation matrix (XO) can be easily determined without practically causing the robot (10) to take an attitude so that the tool coordinates system (10C) and the hand coordinates system (10B) become parallel to each other. The tool coordinates system (10C) is defined by the use of the transformation matrix (XO).

# F I G . 1 (A)

# F I G . 1 (B)

# F I G . 1 (C)

Technical Field

The present invention relates to a method of defining a tool coordinate system of a robot, and more particularly to a tool coordinate defining method capable of easily obtaining defined data of a tool coordinate system.

Background Art

For controlling the position and attitude of a tool mounted on an industrial robot, it is necessary to define the relationship between a coordinate system fixed to an end effector attachment surface of the robot, i.e., a hand coordinate system, and a coordinate system fixed to a tool, i.e., a tool coordinate system. The relationship between a matrix [HAND] that defines the hand coordinate system and a matrix [TOOL] that defines the tool coordinate system is constant with respect to one tool. Therefore, there exists a transform matrix XO which satisfies the following equation (1):

$$[TOOL] = [HAND] \, XO \qquad (1).$$

The matrix [HAND] and the matrix [TOOL] are each composed of a position component and an attitude component. The relationship between the position components is generally defined separately as a hand grip point. Therefore, only the attitude component will be considered here. The matrix [HAND] and the matrix [TOOL] are a $3 \times 3$ matrix representing a combination of expressions in base coordinates of unit vectors in respective axis directions of the respective coordinate systems.

If the transform matrix XO according to the equation (1) is known, then a robot control system can determine the position and attitude of the tool from the respective axis values, and can also determine the respective axis values to achieve the position and attitude of the tool from the position and attitude of the tool. Heretofore, the axis values when the tool coordinate system is parallel to the base coordinate system of the robot are used as defined data to determine the transform matrix XO. A process of determining the transform matrix XO will be described below.

First, the robot is controlled to take such an attitude that the tool coordinate system is parallel to the base coordinate system, and the axis values at this time are read. A matrix [HAND b] representing the hand coordinate system is determined on the basis of the read axis values. Using the matrix [HAND b] representing the hand coordinate system, a matrix [TOOL b] representing the tool coordinate system at that attitude is expressed by the following equation (2):

$$[TOOL \, b] = [HAND \, b] \, XO \qquad (2).$$

Since the tool coordinate system is parallel to the base coordinate system at this time, the matrix [TOOL b] becomes a unit matrix E, satisfying the following equation (3):

$$E = [TOOL \, b] \qquad (3).$$

From the equations (2) and (3) above, the transform matrix XO is represented by the following equation (4):

$$XO = [HAND \, b]^{-1} = {}^{T}[HAND \, b] \qquad (4).$$

Therefore, the transform matrix XO between the hand coordinate system and the tool coordinate system can be determined from the matrix [HAND b] representing the hand coordinate system, i.e., can be defined from the axis values at the time the robot is controlled to take such an attitude that the tool coordinate system is parallel to the base coordinate system.

The process of controlling the robot to take such an attitude that the tool coordinate system is parallel to the base coordinate system is usually carried out through visual observations. It has therefore been difficult to make the robot achieve such a parallel attitude accurately, and hence to obtain a highly accurate transform matrix XO. If the robot is to take an accurate parallel attitude in order to obtain a highly accurate transform matrix XO, then it has been required to have a special jig on hand, and a procedure for confirming such a parallel attitude has been cumbersome. Depending on the location where the robot is installed, no space may be available for the robot to take a parallel attitude. The inclined relationship between the coordinate systems can normally be represented sufficiently by three data items. Determining the transform matrix XO according to the conventional process needs six axis values if the robot has six degrees of freedom. Consequently, more data items than necessary are required.

Disclosure of the Invention

In view of the aforesaid problems, it is an object of the present invention to provide a tool coordinate defining method capable of easily determining a transform matrix for defining a tool coordinate system.

According to the present invention, the above object can be achieved by a method of defining a tool coordinate system of a robot, comprising the steps of setting a robot to a 0° position, rotating the tool coordinate system about X, Y, and Z axes to make the tool coordinate system parallel to a base coordinate system of the robot when the robot is in the 0° position, and defining the tool coordinate system based on the angles through which the tool coordinate system are rotated about the X, Y, and Z axes.

The robot is set to the 0° position, and when the robot is in the 0° position, the tool coordinate system is rotated about the X, Y, Z axes to make the tool coordinate system parallel to the base coordinate system. A transform matrix representing the inclination relationship between a hand coordinate system and the tool coordinate system is determined on the basis of the angles through which the tool coordinate system is rotated about the X, Y, Z axes and the matrix that indicates the attitude of the hand coordinate system in the 0° position of the robot.

The angles about the X, Y, Z axes for making the base coordinate system parallel to the tool coordinate system can easily be known from drawings or the like. The 0° position of the robot is the position in which the axes of the robot are of 0°, and the attitude of the hand coordinate system at the time the robot is in the 0° position can easily be known. Therefore, the transform matrix which defines the inclination relationship between the hand coordinate system and the tool coordinate system can simply be determined without having to control the robot to actually take such an attitude that the tool coordinate system and the hand coordinate system are parallel to each other.

Brief Description of the Drawings

FIGS. 1(A), 1(B), and 1(C) are diagrams illustrative of a tool coordinate defining method according to the present invention;
FIG. 2 is a perspective view of a robot to which the present invention is applied;
FIG. 3 is a perspective view of a hand coordinate system; and
FIG. 4 is a block diagram of a robot control system.

Best Mode For Carrying Out The Invention

An embodiment of the present invention will hereinafter be described below with reference to the drawings.

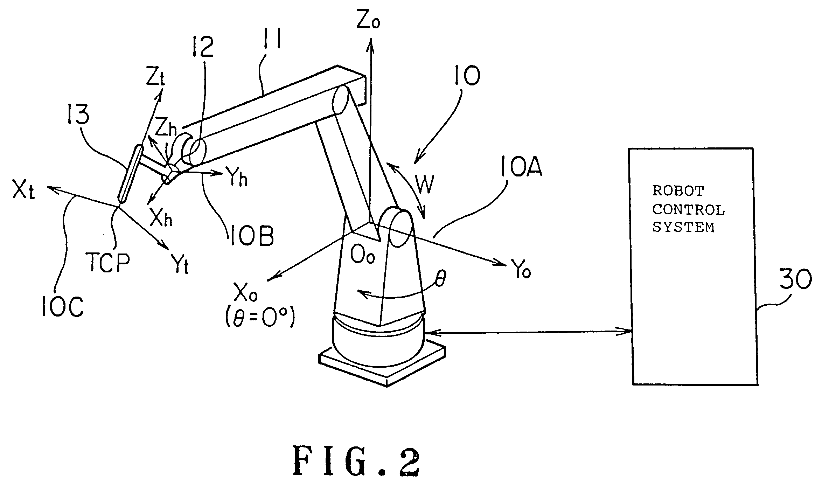

As shown in FIG. 2, a robot 10, which comprises an articulated robot with six degrees of freedom, operates according to command signals from a robot control system 30. The robot 10 includes an arm 11 having an end effector attachment surface 12 on its tip end with a tool 13 attached thereto. The robot 10 has three coordinate systems, i.e., a base coordinate system 10A, a hand coordinate system 10B, and a tool coordinate system 10C.

The base coordinate system 10A is a Cartesian coordinate system fixed to the robot 10. The base coordinate system 10A has an origin Oo at the point of intersection between the center of rotation about a $\theta$ axis and the center of rotation about a W axis, a Zo axis perpendicular to the plane of rotation about the $\theta$ axis, an Xo axis along which the arm 11 extends at a 0° position on the $\theta$ axis, and a Yo axis perpendicular to a Zo - Xo plane (right-hand system).

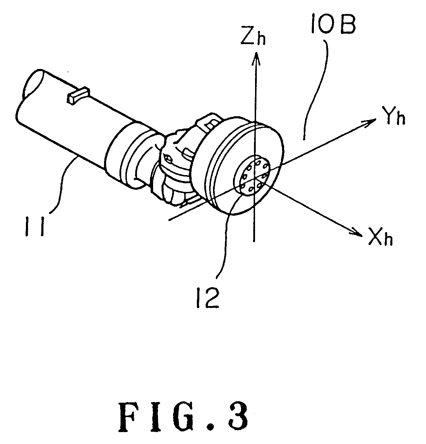

As shown FIG. 3, the hand coordinate system 10B is a Cartesian coordinate system fixed to the end effector attachment surface 12 on the tip end of the arm 11. The hand coordinate system 10B has an origin at the center of the end effector attachment surface 12 and an Xh axis normal to the end effector attachment surface 12. The position and attitude of the hand coordinate system 10B can be calculated from the axis positions of the robot 10 based on design information of mechanisms of the robot 10 by the robot control system 30.

The tool coordinate system 10C is a Cartesian coordinate system fixed to the tool 13, and has a Zt axis extending axially of the tool 13 and an origin at the tip end TCP of the tool 13.

The robot control system 30 outputs command signals to the respective axes of the robot 10 to control the position and attitude of the tool 13. When the position and attitude of the tool 13 are controlled, it is

4

necessary to recognize the attitude (inclination) relationship between the tool coordinate system 10C fixed to the tool 13 and the hand coordinate system 10B fixed to the end effector attachment surface 12, i.e., it is necessary to predefine a transform matrix XO for converting the hand coordinate system 10B into the tool coordinate system 10C. A process of determining the transform matrix XO will be described below.

A matrix [HAND 0] representing the hand coordinate system at a 0° position is expressed according to the following equation (5), using a matrix [TOOL 0] representing the tool coordinate system at the 0° position and the transform matrix XO:

[TOOL 0] = [HAND 0] XO    (5).

The matrix [HAND 0] according to the equation (5) can be determined by calculations effected in the robot control system 30 from a hand grip point and design values of the mechanisms of the robot 10. Generally, the hand coordinate system 10B at the 0° position is simply related to the base coordinate system 10A, such as, parallel to the base coordinate system 10A, and may be represented by a unit vector in some cases. It is a constant that is uniquely determined depending on the robot type, as indicated by the following equations (6), (7):

If the robot is of a type M, then the hand coordinate system 10B is indicated by:

$$\text{HAND\_0} = \begin{bmatrix} 0 & -1 & 0 \\ 0 & 0 & -1 \\ 1 & 0 & 0 \end{bmatrix} \qquad \cdots (6).$$

If the robot is of a type N, then the hand coordinate system 10B is indicated by:

$$\text{HAND\_0} = \begin{bmatrix} 1 & 0 & 0 \\ 0 & 1 & 0 \\ 0 & 0 & 1 \end{bmatrix} \qquad \cdots (7).$$

Now, the tool coordinate system 10C is rotated about the axes thereof to bring these axes into parallel to the respective axes of the base coordinate system 10A in a procedure to determine the transform matrix XO.

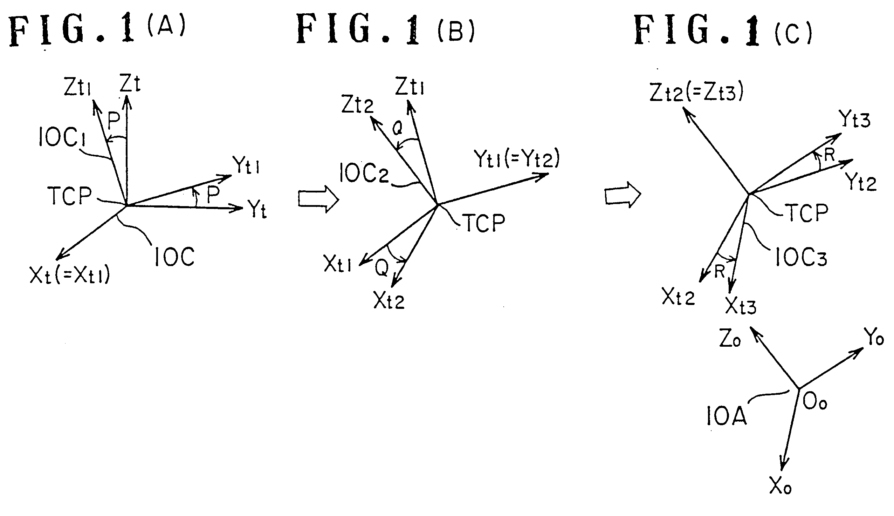

FIGS. 1(A), 1(B), and 1(C) are illustrative of the manner in which the tool coordinate system is rotated about the axes thereof into parallel to the base coordinate system. First, as shown in FIG. 1(A), the tool coordinate system 10C is rotated an angle P about an Xt axis. Then, as shown in FIG. 1(B), the tool coordinate system 10C is rotated an angle Q about a Yt1 axis that is created by such rotation. Thereafter, as shown in FIG. 1(C), the tool coordinate system 10C is rotated an angle R about a Zt2 axis that is created by such rotation. The angles P, Q, R are selected such that a newly generated coordinate system 10C3 (Xt3 - Yt3 - Zt3) is parallel to the base coordinate system 10A. More specifically, when the tool coordinate system 10C in the 0° position is rotated the angle P about the Xt axis, then a coordinate system 10C1 that is newly generated by such rotation is rotated the angle Q about the Yt1 axis, and thereafter a coordinate system 10C2 that is newly generated by such rotation is rotated the angle Q about the Zt2 axis, the axes Xt3, Yt3, Zt3 of the finally generated coordinate system 10C3 are parallel to the respective axes Xo, Yo, Zo of the base coordinate system 10A.

Both sides of the equation (5) above are multiplied by a matrix [P Q R] for rotating the tool coordinate system 10C, resulting in the following equation (8):

[TOOL 0] [P Q R]
= [HAND 0] XO [P Q R]    (8).

Since the matrix on the left-hand side of the equation (8) is parallel to the base coordinate system 10A, it becomes a unit matrix E in the base coordinate system 10A:

E = [HAND 0] XO [P Q R]    (9).

Hence,

5

$$[\text{HAND } 0]^{-1} \; E \; [P \; Q \; R]^{-1}$$

$$= [\text{HAND } 0]^{-1} \; [\text{HAND } 0] \; XO \; [P \; Q \; R] \; [P \; Q \; R]^{-1}$$

$$= E \cdot XO \cdot E$$

$$= XO \qquad\qquad\qquad \cdots (10).$$

Therefore,

$$XO = [\text{HAND } 0]^{-1} \; [P \; Q \; R]^{-1}$$

$$= [\text{HAND } 0]^{-1} \; {}^{T}[P \; Q \; R] \qquad\qquad \cdots (11)$$

where

$$[P \; Q \; R]$$

$$= \text{Rot}(Xt, P) \; \text{Rot}(Yt1, Q) \; \text{Rot}(Zt2, R)$$

$$= \begin{bmatrix} 1 & 0 & 0 \\ 0 & cP & -sP \\ 0 & sP & cP \end{bmatrix} \begin{bmatrix} cP & 0 & sQ \\ 0 & 1 & 0 \\ -sQ & 0 & cQ \end{bmatrix} \begin{bmatrix} cR & -sR & 0 \\ sR & cR & 0 \\ 0 & 0 & 1 \end{bmatrix}$$

$$= \begin{bmatrix} cQcR & -cQsR & sQ \\ sPsQcR+cPsR & -sPsQsR+cPcR & -sPcQ \\ -cPsQcR+sPsR & cPsQsR+sPcR & cPcQ \end{bmatrix}$$

$$\cdots (12).$$

Thus,

$$XO = [\text{HAND\_0}]^{-1}$$
$$\begin{bmatrix} cQcR & sPsQcR+cPsR & -cPsQcR+sPsR \\ -cQsR & -sPsQsR+cPcR & cPsQsR+sPcR \\ sQ & -sPcQ & cPcQ \end{bmatrix}$$

$$\cdots (13).$$

In the above equations (11), (12), and (13), T represents the transpose of a matrix, s represents sin, and c represents cos.

As described above, in the 0° position of the robot 10, the tool coordinate system 10C is rotated about the axes thereof until the new coordinate system 10C3 is parallel to the base coordinate system 10A, and the transform matrix XO representing the inclination relationship between the hand coordinate system 10B and the tool coordinate system 10C is determined based on the angles P, Q, R about the axes and the matrix [HAND 0] representing the attitude of the hand coordinate system 10B in the 0° position of the robot 10 (the equation (11)). The tool coordinate system 10C is defined using the transform matrix XO (the equation (1)).

6

The matrix [HAND 0] representing the attitude (the equation (11)) of the hand coordinate system 10B when the robot 10 is in the 0° position can easily be known from design values of the robot 10. The angles P, Q, R about the axes for making the base coordinate system 10A parallel to the tool coordinate system 10C can also easily be known from drawings or the like. Therefore, the transform matrix XO which defines the inclination relationship between the hand coordinate system 10B and the tool coordinate system 10C can simply be determined according to the equation (11) without having to control the robot 10 to actually take such an attitude that the tool coordinate system 10C and the hand coordinate system 10B are parallel to each other. Consequently, any special jigs or processes are not required to confirm that the coordinate systems 10B, 10C are parallel to each other. Determination of the transform matrix XO requires only three values, P, Q, R to be used, rather than the six axis values that have heretofore been needed.

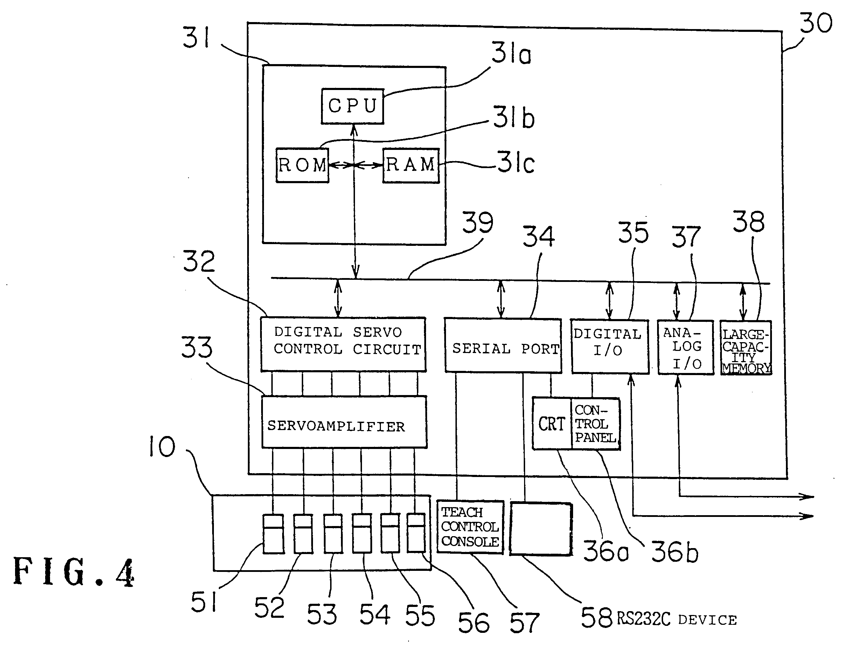

FIG. 4 shows in block form the robot control system 30. The robot control system 30 includes a processor board 31 having a processor 31a, a ROM 31b, and a RAM 31c. The processor 31a controls the robot control system 30 as a whole according to a system program stored in the ROM 31b. The RAM 31c stores the transform matrix XO and various data. The RAM 31c has a portion constructed as a non-volatile memory. The processor board 31 is connected to a bus 39.

A digital servo control circuit 32 is connected to the bus 39, and energizes servomotors 51, 52, 53, 54, 55, 56 through a servoamplifier 33 according to commands from the processor board 31. These servomotors are mounted on the robot 10 for actuating the robot 10 about the respective axes.

A serial port 34 is connected to the bus 39, and also to a teach control console 57 and an RS232C device 58. The operator inputs the angles P, Q, R through the teach control console 57. A CRT 36a is connected to the serial port 34.

A control panel 36b is connected to a digital I/O 35. Command signals relative to the position and attitude of the robot 10 are outputted to the robot 10 through the digital I/O 35 and an analog I/O 37. A large-capacity memory 38 stores teaching data and data of the angles P, Q, R.

With the present invention, as described above, the tool coordinate system in the 0° position of the robot is rotated about the axes thereof until the tool coordinate system is parallel to the base coordinate system, and the transform matrix representing the inclination relationship between the hand coordinate system and the tool coordinate system is determined on the basis of the angles through which the tool coordinate system is rotated about the axes and the matrix that indicates the attitude of the hand coordinate system in the 0° position of the robot.

The attitude of the hand coordinate system when the robot is in the 0° position can easily be known from design values of the robot. The angles about the axes for making the base coordinate system parallel to the tool coordinate system can also easily be known from drawings or the like. Therefore, the transform matrix which defines the inclination relationship between the hand coordinate system and the tool coordinate system can simply be determined without having to control the robot to actually take such an attitude that the tool coordinate system and the hand coordinate system are parallel to each other. Consequently, any special jigs or processes are not required to confirm that the coordinate systems are parallel to each other. Only three angle values are required to be used to determine the transform matrix, while the six axis values have heretofore been needed.

**Claims**

1. A method of defining a tool coordinate system of a robot, comprising the steps of:

   setting a robot to a 0° position;

   rotating said tool coordinate system about X, Y, and Z axes to make said tool coordinate system parallel to a base coordinate system of the robot when the robot is in said 0° position; and

   defining said tool coordinate system based on the angles through which said tool coordinate system are rotated about said X, Y, and Z axes.

2. A method according to claim 1, wherein the tool coordinate system and the base coordinate system are made parallel to each other by rotating said tool coordinate system about the X axis when the robot is in said 0° position, rotating the tool coordinate system, having been rotated about said X axis, about the Y axis of the tool coordinate system which has been rotated about said X axis, and rotating the tool coordinate system, having been rotated about said Y axis, about the Z axis of the tool coordinate system which has been rotated about said Y axis.

# FIG.1 (A)   FIG.1 (B)   FIG.1 (C)

EP 0 592 681 A1

**FIG.2**

FIG.3

FIG.4

EP 0 592 681 A1

| | International application No. |
|---|---|
| | PCT/JP93/00340 |

**A. CLASSIFICATION OF SUBJECT MATTER**

Int. Cl$^5$  G05B19/403

According to International Patent Classification (IPC) or to both national classification and IPC

**B. FIELDS SEARCHED**

Minimum documentation searched (classification system followed by classification symbols)

Int. Cl$^5$  G05B19/18-42

Documentation searched other than minimum documentation to the extent that such documents are included in the fields searched

| Jitsuyo Shinan Koho | 1932 – 1993 |
|---|---|
| Kokai Jitsuyo Shinan Koho | 1971 – 1993 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 61-25207 (Fanuc Ltd.), July 12, 1984 (12. 07. 84), & WO, A1, 8600727 & DE, CO, 3584881 & EP, A1, 188623 & US, A, 4771222 & EP, B1, 188623 | 1-2 |
| A | JP, A, 2-303779 (Tokico Corp.), May 19, 1989 (19. 05. 89), (Family: none) | 1-2 |
| A | JP, A, 63-296103 (Yokogawa Electric Co., Ltd.), May 27, 1987 (27. 05. 87), (Family: none) | 1-2 |
| A | JP, A, 3-269604 (Okuma Corp.), March 19, 1990 (19. 03. 90), (Family: none) | 1-2 |

| [X] Further documents are listed in the continuation of Box C. | [ ] See patent family annex. |
|---|---|

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| June 15, 1993 (15. 06. 93) | June 29, 1993 (29. 06. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)